# FASCICULE DE BREVET EUROPEEN

(11) **EP 2 817 594 B1**
(45) Date de publication et mention de la délivrance du brevet: **15.11.2017**
(21) Numéro de dépôt: 13710485.7
(22) Date de dépôt: 19.02.2013
(51) Int. Cl.: G01D 11/28, G01D 13/26

(54) **MODULE INSTRUMENTE AMELIORE A MONTAGE ARRIERE POUR TABLEAU DE BORD**
VERBESSERTES INSTRUMENTENMODUL ZUM EINBAU VON HINTEN FÜR EIN ARMATURENBRETT
IMPROVED REAR MOUNTED INSTRUMENT MODULE FOR DASHBOARD

(30) Priorité: 23.02.2012 FR 1251634
(43) Date de publication de la demande: 31.12.2014
(73) Titulaire: Sonceboz Automative SA, 2605 Sonceboz (CH)
(72) Inventeur: HEINRICH, Sébastien, F-67790 Steinbourg (FR); STRAHM, Martin, CH-2017 Boudry (CH)
(74) Mandataire: IP Trust
(86) Numéro de dépôt international: PCT/FR2013/050341
(87) Numéro de publication internationale: WO 2013/124580

(56) Documents cités:
- EP-A1- 1 519 159
- JP-A- 2002 267 506
- JP-A- 2010 197 275
- JP-A- 2011 047 845
- US-A1- 2006 243 191

## Description

### Domaine de l'invention

La présente invention concerne le domaine des moteurs électriques pas-à-pas pour le positionnement précis d'un organe, selon une position angulaire généralement inférieure à 360°. Il concerne plus particulièrement un module indicateur de tableau de bord à montage dit « arrière », c'est-à-dire qu'il est monté derrière le circuit imprimé alors que l'organe à positionner donne l'information devant le circuit imprimé.

### Etat de la technique

On connait déjà, dans le domaine des moteurs électriques pas-à-pas pour tableau de bord décrit dans le brevet japonais JP2010197275. Ce document décrit un module comprenant un moteur électrique avec un ensemble de réduction mécanique, commandant un arbre de sortie éclairé par une diode électroluminescente.

On connaît aussi dans l'état de la technique la demande de brevet japonaise JP2011047845 décrivant un indicateur comprenant un pointeur entrainé par un moyen d'entraînement. Une source de lumière laser 23 émet une un faisceau lumineux en direction d'une surface de réflexion posée sur un arbre de rotation de l'aiguille redirigeant le faisceau laser dans la direction du pointeur.

De tels dispositifs de l'art antérieur sont aussi connus par les brevets JP2009 192290, US2006/243191, JP2010 276592 ou EP1519159.

### Inconvénient de l'état de la technique.

Ces documents de l'art antérieur, proposant des solutions d'illumination d'un module indicateur à montage arrière, présentent tous un défaut majeur qui est l'augmentation importante de l'inertie de l'indicateur lumineux ou de l'arbre de sortie portant l'indicateur lumineux. Cette augmentation d'inertie est préjudiciable à la bonne utilisation du module par augmentation du temps de réaction de l'aiguille, mais aussi par une augmentation du porte-à-faux au niveau du guidage de l'arbre de sortie ou de l'indicateur lumineux. Ces inconvénients impliquent des contraintes mécaniques plus fortes au niveau des paliers supportant l'arbre de sortie.

Par ailleurs, le rendement optique des solutions de l'art antérieur n'est pas optimum et conduit à des pertes de lumière à l'interface entre la led et l'indicateur.

### Solution apportée par l'invention

L'objet de l'invention a pour but de présenter un module indicateur pour tableau de bord à montage arrière permettant de loger à proximité de la tête de l'indicateur des éléments d'information visuel complémentaires, de type témoins lumineux, tout en conservant une bonne luminosité de l'aiguille indicatrice et une inertie d'indicateur minimisée par rapport aux solutions de l'art antérieur.

Un autre objet de l'invention est de proposer une solution simple en termes de connexion électrique.

Plus particulièrement l'invention concerne un module indicateur de tableau de bord conforme à la revendication principale et aux revendications dépendantes annexées.

### Description détaillée des figures

Les caractéristiques et avantages de l'invention ressortiront à la lecture qui suit d'exemples de réalisation détaillés, en référence aux figures annexées qui représentent respectivement :
- les figures 1a et 1b : un tableau de bord, respectivement, en vue de coupe et de face selon une réalisation de l'art antérieur,
- les figures 2a et 2b : un tableau de bord, respectivement, en vue de coupe et de face utilisant deux modules indicateurs selon un mode de réalisation préféré de l'invention,
- la figure 3 : le module indicateur dans un premier mode de réalisation en vue de profil,
- la figure 4 : le module indicateur dans un premier mode de réalisation en vue de trois-quart,
- la figure 5 : le module indicateur dans un premier mode de réalisation en vue de coupe,
- la figure 6 : une vue de détail de la figure 5,
- la figure 7 : une vue explosée du premier mode de réalisation,
- la figure 8 : une vue de détail de la roue de sortie de l'indicateur,
- la figure 9 : le module indicateur dans un second mode de réalisation en vue de profil,
- les figures 10a et 10b : un troisième mode de réalisation.

Dans la description des figures, nous considérons que la source de lumière est sous la forme d'une diode électroluminescente LED (4) de type CMS comme par exemple produite par la société OSRAM sous la référence A67F. L'invention n'est cependant pas limitée à la seule utilisation d'une telle LED.

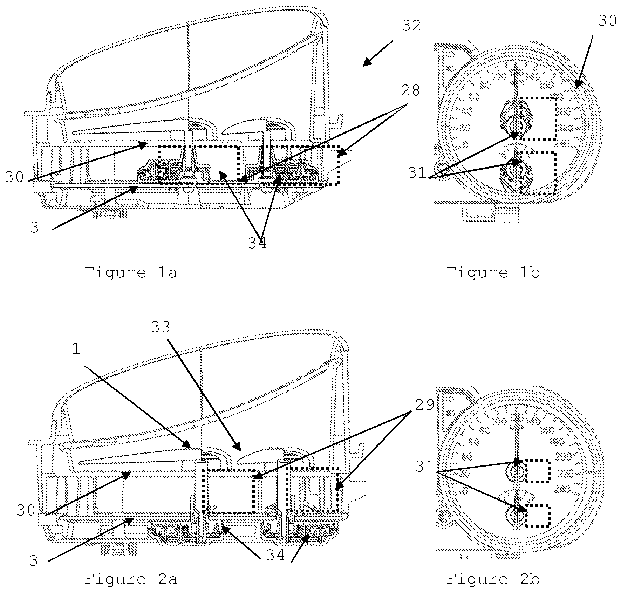

Les figures 1a et 1b représentent un mode de réalisation d'un tableau de bord (32) suivant l'art antérieur utilisant deux modules indicateurs (34) dont le montage est en avant du circuit imprimé (3).

Parce que les modules (34) occupent tout l'espace séparant le circuit imprimé (3) de l'écran d'affichage (30), il n'est pas possible d'installer d'autres sources d'information visuelle supplémentaires. Ainsi, les volumes (28) définis par les dimensions maximales du module (34) définissent, en surface de l'écran d'affichage (30), une zone (31) importante qui ne pourra pas présenter d'affichage supplémentaire.

Un module indicateur utilisant un moteur à montage arrière permet une bien meilleure intégration dans le tableau de bord (32) comme le montrent les figures 2a et 2b.

Parce que la module (34) est installé derrière le circuit imprimé (3), il laisse libre un plus grand volume, de façon à ce que seuls les volumes (29) définis par la largeur de la tête (33) de l'indicateur (1) interdisent d'installer d'autres sources d'information visuelle supplémentaires. En surface de l'écran d'affichage (30), la zone (31) qui ne peut pas présenter d'affichage supplémentaire est réduite et ne s'étend pas au-delà de la largeur de la tête (33) de l'indicateur (1).

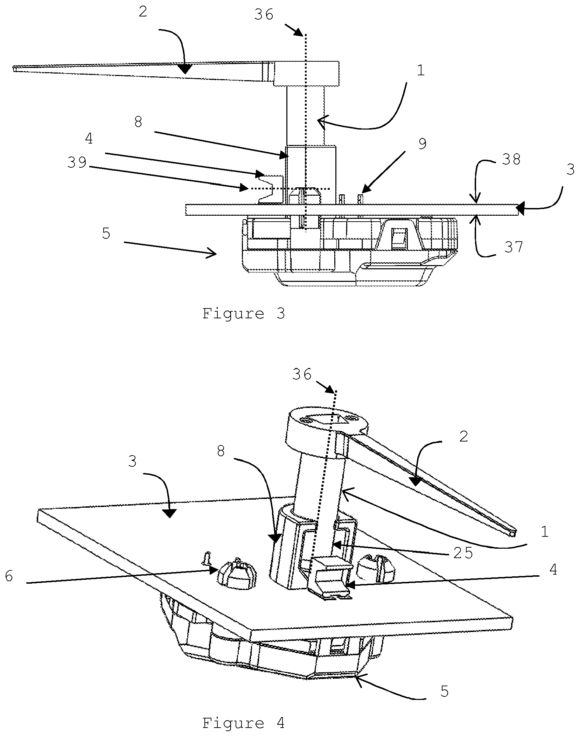

La figure 3 présente un module indicateur de tableau de bord selon l'invention et un mode de réalisation préféré. Il comprend un indicateur visuel (1) dont l'une des extrémités se présente sous la forme d'une aiguille (2) visible par le conducteur et que l'on cherche à illuminer, et s'étendant au-delà de la deuxième face (38) du circuit imprimé (3), qui est la face supérieure sur cette figure 3. Cet indicateur (1) est connecté mécaniquement à un arbre de sortie (non visible) commandé par un moteur électrique compris dans un boitier (5). Ce boitier (5) est positionné sur la première face (37) du circuit imprimé (3), qui est ici la face inférieure, et le moteur électrique contenu dans le boitier (5) entraine, suivant l'axe de rotation (36), l'indicateur (1) au travers du circuit imprimé (3). Sur la deuxième face (38) du circuit imprimé (3) est placée une source de lumière, ici sous la forme d'une LED (4), qui envoie le flux lumineux suivant une direction d'émission (39) parallèle au circuit imprimé (3) dans l'indicateur (1). Le boitier (5) est prolongé à travers le circuit imprimé (3) au-delà de la deuxième face (38) par une cage à lumière (8) qui présente une ouverture permettant au flux lumineux issu de la LED (4) d'atteindre l'indicateur (1).

Cette cage de lumière (8) constitue un manchon opaque entourant la base de l'axe de l'indicateur (1). Cette cage de lumière (8) présente une surface réfléchissante et est percée d'une fenêtre latérale communiquant avec la diode électroluminescente (4). Ce manchon prolonge le boîtier, pour permettre un moulage d'une pièce unique.

La cage à lumière (8) a ainsi pour fonction de limiter la perte du flux lumineux en-dehors de l'indicateur (1). Le flux lumineux de la LED (4) est renvoyé suivant l'axe de rotation (36) vers le haut de l'indicateur en direction de l'aiguille (2) de l'indicateur (1).

Le moteur contenu dans le boitier (5) est connecté électriquement par des pattes de connexion (9) qui viennent en contact avec le circuit imprimé (3) pour y être connectées soudés ou non soudés.

La figure 4 présente ce même module suivant une vue de trois-quarts où l'on voit aussi la connexion mécanique du boitier réalisée par des éléments de connexion (6) déformables qui coopèrent avec des perçages du circuit imprimé (3). L'ouverture (25) de la cage à lumière (8) est aussi visible en regard de la LED (4) qui envoie donc son flux lumineux dans l'indicateur (1) par cette ouverture (25).

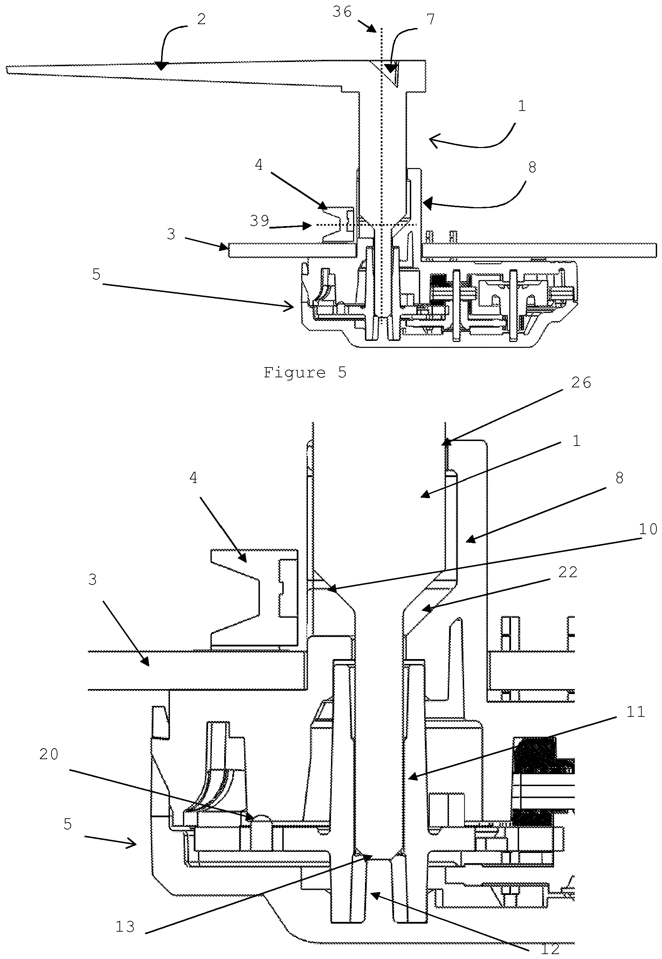

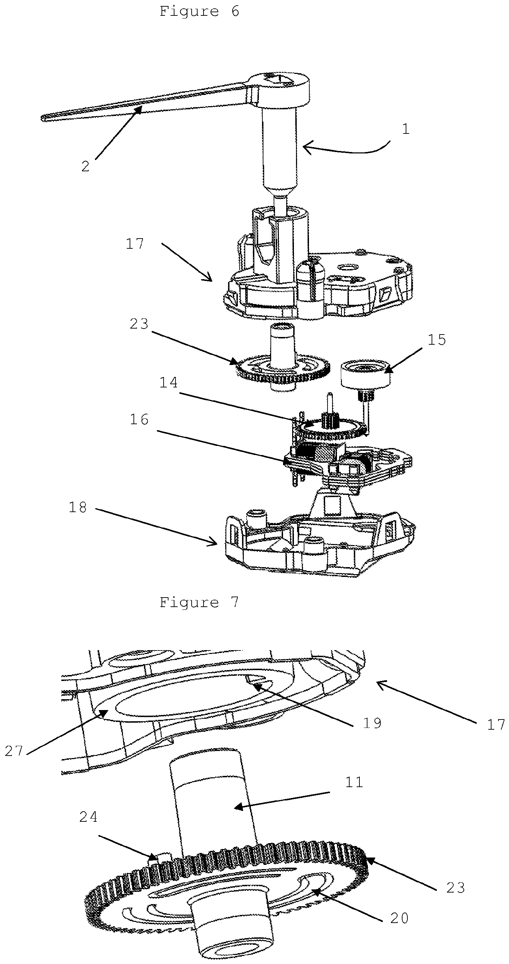

La figure 5 présente toujours le module dans le mode de réalisation préféré mais en vue de coupe où l'on retrouve les éléments décrits précédemment mais aussi l'intérieur du boitier (5). Ces éléments sont particulièrement décrits en regard de la figure 6 qui présente une vue de détail en coupe de l'intérieur du boitier (5).

Le moteur présente un arbre de sortie (11) creux offrant une liaison de type femelle complémentaire à la liaison de type mâle de l'indicateur (1). Cet arbre de sortie (11) est solidaire d'une roue de sortie (23) qui présente des bras frotteurs (20) permettant de générer un frottement constant favorable au mouvement fluide de l'indicateur (1). L'indicateur (1) est terminé par une extrémité basse (13) en contact avec une butée axiale (12) solidaire du boitier (5).

Au-delà du circuit imprimé (3) du côté de la deuxième face (38) du circuit imprimé (3), la LED (4) envoie son flux lumineux au travers de l'ouverture (25) de la cage à lumière (8) dans l'indicateur (1). Cet indicateur (1) présente un déflecteur (10) qui est une forme oblique formant un angle voisin de 45° par rapport à la surface du circuit imprimé (3). La LED (4) envoyant son flux lumineux suivant une direction majoritairement parallèle au circuit imprimé (3), suivant la direction d'émission (39), une grande partie du flux lumineux est ainsi diffractée par le déflecteur (10) afin d'atteindre la partie supérieure de l'indicateur (1) en direction de l'aiguille (2) suivant l'axe de rotation (36).

Afin d'optimiser encore le flux lumineux collecté par l'indicateur (1), parce que la LED émet sur un angle solide généralement de l'ordre de 120° pour des produits classiques, il peut être intéressant d'utiliser la cage à lumière (8) afin d'éviter la déperdition de lumière autour de l'indicateur (1) et de renvoyer une grande partie de cette lumière non directement collectée dans l'indicateur (1). Pour ce faire, la cage à lumière (8) présente avantageusement un déflecteur (22) sous la forme d'une surface intérieure oblique formant un angle de 45° avec la surface du circuit imprimé (3) afin de renvoyer la lumière vers la partie supérieure de l'indicateur (1). Ce déflecteur (22) de la cage à lumière (8) sera idéalement en finition poli-miroir afin de maximiser son pouvoir réfléchissant.

Afin d'optimiser le guidage de l'indicateur (1), celui-ci est guidé au-delà de la première face du circuit imprimé (3) par l'arbre de sortie (11) lui-même guidé dans le boitier (5), et d'autre part au-delà de la deuxième face (38) du circuit imprimé (3) par la cage à lumière (8) dont l'extrémité supérieure réalise un palier (26) en contact glissant avec l'indicateur (1). Ce palier (26) est idéalement intégral avec la cage à lumière (8) en étant son prolongement.

Afin de limiter la taille de l'arbre de sortie (11) et de la roue de sortie (23), l'indicateur (1) présente un diamètre minimisé sur sa partie inférieure au niveau du contact avec l'arbre de sortie (11), alors qu'il présente un diamètre augmenté au niveau de la collection du flux lumineux et du palier (26) de la cage à lumière (8). Ce diamètre augmenté ne sera cependant pas maximisé afin de ne pas trop augmenter l'inertie de l'indicateur (1).

Typiquement le diamètre inférieur de l'indicateur (1), au niveau de l'arbre de sortie (11), est de l'ordre de 2 mm et le diamètre supérieur, au niveau du palier (26), de l'ordre de 6 mm sans que ces valeurs ne constituent une limitation fonctionnelle.

La figure 7 présente une vue éclatée du mode de réalisation préféré où l'on voit, en plus des éléments déjà décrits plus haut, le moteur électrique constitué d'un stator bobiné (16), d'un aimant (15) sous la forme d'une bague multipolaire entrainée en rotation par l'action du flux magnétique crée par le stator bobiné (16), d'un ensemble de réduction mécanique formé d'une roue intermédiaire (14) et d'une roue de sortie (23). Le boitier (5) est constitué d'un premier couvercle (17) prolongé ici par la cage à lumière (8) et d'un second couvercle (18) venant se fixer au premier couvercle (17).

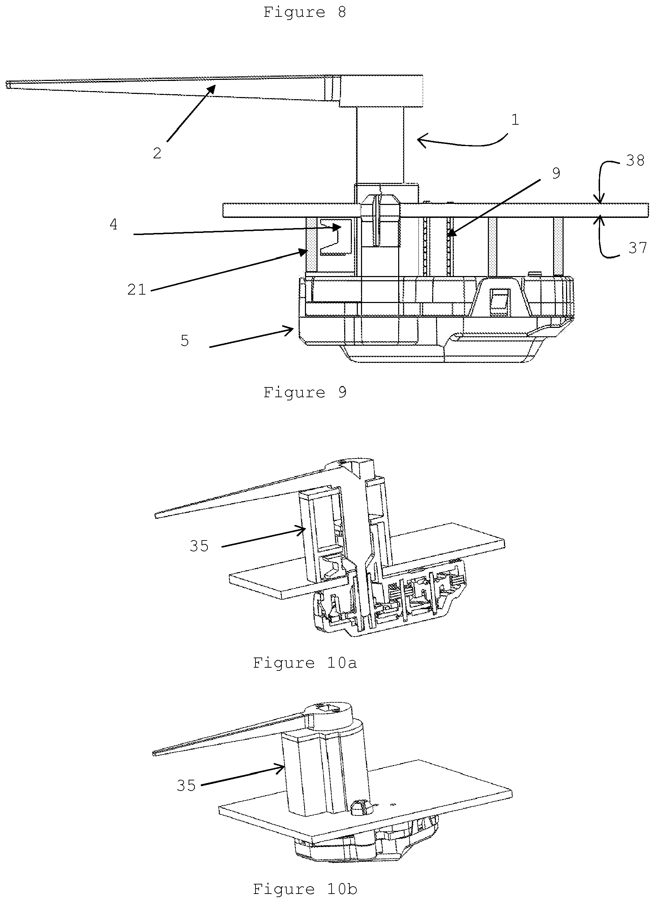

La figure 8 présente une vue de détail de la roue de sortie (23) ici intégrale avec l'arbre de sortie (11) et présentant d'une part des bras (20) qui viennent frotter sur une piste (27) du premier couvercle (17) et d'autre part un arrêt (24) venant toucher la butée angulaire (19) solidaire du premier couvercle (17).

La figure 9 présente un mode de réalisation alternatif d'un module dans lequel la LED (4) est placée du même côté du circuit imprimé (3) que le boitier (5) sur la première face (37) du circuit imprimé (3). Afin de garder un boitier similaire à celui présenté pour le mode de réalisation préféré, on peut ainsi envisager de fixer le boitier (5) au circuit imprimé (3) par des colonnes (21). Le stator bobiné (16) est connecté au circuit imprimé par le prolongement des pattes de connexion électrique (9).

Il est aussi possible d'envisager placer la LED (4) à l'intérieur du boitier (5), ce qui nécessite une modification d'au moins un des premier ou second couvercles (17, 18).

Les figures 10a et 10b montrent un mode de réalisation alternatif dans lequel est rajouté un guide de lumière (35) entourant la cage à lumière (8) et permettant de collecter le peu de lumière s'échappant de la cage à lumière (8) afin d'éviter tout problème éventuel de halo derrière l'indicateur visuel (1).

## Revendications

1. - Module indicateur de tableau de bord (34) constitué d'un moteur électrique, d'un ensemble de réduction mécanique de mouvement, d'un arbre de sortie (11), d'un boitier (5), d'un indicateur visuel (1) et d'une source de lumière (4), ledit moteur électrique étant connecté mécaniquement et électriquement sur une première face (37) d'un circuit imprimé (3) et entrainant l' indicateur visuel (1) autour d'un axe de rotation (36) via ledit ensemble de réduction et l'arbre de sortie (11) au travers du circuit imprimé (3) de manière à ce que ledit indicateur (1) donne une information visuelle au-delà d'une deuxième face (38) dudit circuit imprimé (3), ladite source de lumière (4) étant positionnée sur la première (37) ou deuxième face (38) du circuit imprimé (3) de manière à envoyer un flux lumineux en direction de l'axe de rotation (36) **caractérisé en ce que**
- ladite source de lumière (4) est une source LED (4) positionnée sur la première (37) ou deuxième (38) face du circuit imprimé (3)
- **en ce qu'**une cage à lumière (8) constituée par un manchon opaque entoure l'axe de l'indicateur (1), présente une surface réfléchissante (22) ainsi qu'une ouverture permettant au flux lumineux issu de la LED (4) d'atteindre l'indicateur (1), et forme à son extrémité supérieure un palier (26) en contact glissant avec l'indicateur (1)
- et **en ce que** le flux lumineux de la LED (4) est renvoyé par la surface réfléchissante (22) suivant l'axe de rotation (36) vers le haut de l'indicateur en direction de l'aiguille (2) de l'indicateur (1).

2. - Module indicateur de tableau (34) de bord selon la revendication 1 **caractérisé en ce que** ce que le boitier (5) est prolongé à travers le circuit imprimé (3) au-delà de la deuxième face (38) par ladite cage à lumière (8).

3. - Module indicateur de tableau (34) de bord selon la revendication 1 **caractérisé en ce que** ledit arbre de sortie (11) est un arbre creux présentant une connexion mécanique de type femelle et **en ce que** ledit indicateur (1) présente une connexion mécanique de type mâle complémentaire à ladite connexion de type femelle dudit arbre de sortie (11).

4. - Module indicateur de tableau de bord (34) selon l'une des revendications précédentes **caractérisé en ce que** ledit indicateur (1) présente une surface diffractant la lumière en regard de ladite source de lumière (4).

5. - Module indicateur de tableau de bord (34) selon l'une des revendications précédentes **caractérisé en ce que** l'arbre de sortie (11) présente une surface réfléchissante en regard de ladite source de lumière (4).

6. - Module indicateur de tableau de bord (34) selon la revendication précédente **caractérisé en ce qu'**un guide de lumière (35) est placé autour de la cage de lumière (8) et de la source lumineuse (4).

7. - Module indicateur de tableau de bord (34) selon l'une des au moins revendications précédentes **caractérisé en ce que** la cage de lumière (8) présente localement une forme de palier (26) guidant l'indicateur visuel (1).

8. - Module indicateur de tableau de bord (34) selon l'une des revendications précédentes **caractérisé en ce que** la source de lumière (4) est une diode électroluminescente.

9. - Module indicateur de tableau de bord (34) selon l'une des revendications précédentes **caractérisé en ce qu'**une extrémité de l'indicateur visuel (1) est sous la forme d'une aiguille d'affichage (2) se déplaçant parallèlement au circuit imprimé (3) au-dessus d'un écran d'affichage (30) et **en ce que** ledit indicateur (1) présente un prisme (7) qui renvoie le flux lumineux perpendiculairement depuis l'axe de rotation de l'indicateur (1) vers ladite aiguille (2).

## Patentansprüche

1. Armaturenbrett-Anzeigemodul (34), das aus einem Elektromotor, einer mechanischen Bewegungsuntersetzungseinheit, einer Abtriebswelle (11), einem Gehäuse (5), einem optischen Anzeiger (1) und einer Lichtquelle (4) besteht, wobei der Elektromotor mechanisch und elektrisch auf einer ersten Seite (37) einer Leiterplatte (3) verbunden ist und den optischen Anzeiger (1) über die Untersetzungseinheit und die Abtriebswelle (11) durch die Leiterplatte (3) hindurch um eine Drehachse (36) antreibt, damit der Anzeiger (1) jenseits einer zweiten Seite (38) der Leiterplatte (3) eine optische Information anzeigt, wobei die Lichtquelle (4) auf der ersten (37) oder zweiten Seite (38) der Leiterplatte (3) so positioniert ist, dass sie einen Lichtstrom in Richtung der Drehachse (36) schickt, **dadurch gekennzeichnet, dass**
- die Lichtquelle (4) eine LED-Quelle (4) ist, die auf der ersten (37) oder zweiten (38) Seite der Leiterplatte (3) positioniert ist,
- dass ein aus einer undurchsichtigen Hülse bestehender Lichtkäfig (8) die Achse des Anzeigers (1) umgibt, eine reflektierende Fläche (22) sowie eine Öffnung aufweist, die es dem von der LED (4) stammenden Lichtstrom ermöglicht, den Anzeiger (1) zu erreichen, und an seinem oberen Ende ein Lager (26) in Gleitkontakt mit dem Anzeiger (1) formt,
- und dass der Lichtstrom der LED (4) von der reflektierenden Fläche (22) gemäß der Drehachse (36) zur Oberseite des Anzeigers in Richtung der Nadel (2) des Anzeigers (1) zurückgelenkt wird.

2. Armaturenbrett-Anzeigemodul (34) nach Anspruch 1, **dadurch gekennzeichnet, dass** das Gehäuse (5) durch die Leiterplatte (3) hindurch über die zweite Seite (38) hinaus durch den Lichtkäfig (8) verlängert wird.

3. Armaturenbrett-Anzeigemodul (34) nach Anspruch 1, **dadurch gekennzeichnet, dass** die Abtriebswelle (11) eine Hohlwelle ist, die eine mechanische Verbindung vom Buchsentyp aufweist, und dass der Anzeiger (1) eine mechanische Verbindung vom Steckertyp komplementär zur Verbindung vom Buchsentyp der Abtriebswelle (11) aufweist.

4. Armaturenbrett-Anzeigemodul (34) nach einem der vorhergehenden Ansprüche, **dadurch gekennzeichnet, dass** der Anzeiger (1) eine Licht beugende Fläche gegenüber der Lichtquelle (4) aufweist.

5. Armaturenbrett-Anzeigemodul (34) nach einem der vorhergehenden Ansprüche, **dadurch gekennzeichnet, dass** die Abtriebswelle (11) eine reflektierende Fläche gegenüber der Lichtquelle (4) aufweist.

6. Armaturenbrett-Anzeigemodul (34) nach dem vorhergehenden Anspruch, **dadurch gekennzeichnet, dass** ein Lichtleiter (35) um den Lichtkäfig (8) und die Lichtquelle (4) herum angeordnet ist.

7. Armaturenbrett-Anzeigemodul (34) nach mindestens einem der vorhergehenden Ansprüche, **dadurch gekennzeichnet, dass** der Lichtkäfig (8) lokal die Form eines Lagers (26) aufweist, das den optischen Anzeiger (1) führt.

8. Armaturenbrett-Anzeigemodul (34) nach einem der vorhergehenden Ansprüche, **dadurch gekennzeichnet, dass** die Lichtquelle (4) eine Elektrolumineszenzdiode ist.

9. Armaturenbrett-Anzeigemodul (34) nach einem der vorhergehenden Ansprüche, **dadurch gekennzeichnet, dass** ein Ende des optischen Anzeigers (1) in Form einer Anzeigenadel (2) vorliegt, die sich parallel zur Leiterplatte (3) oberhalb eines Bildschirms (30) bewegt, und dass der Anzeiger (1) ein Prisma (7) aufweist, das den Lichtstrom lotrecht von der Drehachse des Anzeigers (1) zur Nadel (2) zurückschickt.

## Claims

1. Dashboard indicator module (34) consisting of an electric motor, a mechanical movement reduction assembly, an output shaft (11), a casing (5), a visual indicator (1) and a light source (4), said electric motor being connected mechanically and electrically to a first face (37) of a printed circuit (3) and driving the visual indicator (1) about an axis of rotation (36) via said reduction assembly and the output shaft (11) through the printed circuit (3) so that said indicator (1) gives visual information beyond a second face (38) of said printed circuit (3), said light source (4) being positioned on the first (37) or second (38) face of the printed circuit (3) so as to send a light flux in the direction of the axis of rotation (36), **characterized in that**
- said light source (4) is an LED source (4) positioned on the first (37) or second (38) face of the printed circuit (3)
- **in that** a light cage (8) constituted by an opaque sleeve surrounds the axis of the indicator (1), has a reflecting surface (22) and an aperture allowing the light flux from the LED (4) to reach the indicator (1), and forms, at its top end, a bearing (26) in sliding contact with the indicator (1)
- and **in that** the light flux from the LED (4) is sent back by the reflecting surface (22) along the axis of rotation (36) towards the top of the indicator in the direction of the needle (2) of the indicator (1).

2. Dashboard indicator module (34) according to Claim 1, **characterized in that** the casing (5) is prolonged through the printed circuit (3) beyond the second face (38) by said light cage (8).

3. Dashboard indicator module (34) according to Claim 1, **characterized in that** said output shaft (11) is a hollow shaft having a mechanical connection of female type and **in that** said indicator (1) has a mechanical connection of male type complementary to said connection of female type of said output shaft (11).

4. Dashboard indicator module (34) according to one of the preceding claims, **characterized in that** said indicator (1) has a surface diffracting the light facing said light source (4).

5. Dashboard indicator module (34) according to one of the preceding claims, **characterized in that** the output shaft (11) has a reflecting surface facing said light source (4).

6. Dashboard indicator module (34) according to the preceding claim, **characterized in that** a light guide (35) is placed around the light cage (8) and the light source (4).

7. Dashboard indicator module (34) according to at least one of the preceding claims, **characterized in that** the light cage (8) locally has a bearing form (26) guiding the visual indicator (1).

8. Dashboard indicator module (34) according to one of the preceding claims, **characterized in that** the light source (4) is a light-emitting diode.

9. Dashboard indicator module (34) according to one of the preceding claims, **characterized in that** one end of the visual indicator (1) is in the form of a display needle (2) moving parallel to the printed circuit (3) above a display screen (30) and **in that** said indicator (1) has a prism (7) which sends back the light flux perpendicularly from the axis of rotation of the indicator (1) towards said needle (2).
